# EUROPÄISCHE PATENTANMELDUNG

(11) **EP 3 945 493 A1**
(43) Veröffentlichungstag der Anmeldung: **02.02.2022**
(21) Anmeldenummer: 21185409.6
(22) Anmeldetag: 13.07.2021
(51) Int. Cl.: G06T 7/00, H04R 1/10

(54) **VERFAHREN ZUR FEHLERERKENNUNG BEI EINEM HÖRGERÄT SOWIE SYSTEM**

(30) Priorität: 28.07.2020 DE 102020209509
(71) Anmelder: Sivantos Pte. Ltd., Singapore 539775 (SG)
(72) Erfinder: GIESE, Ulrich, 90765 Fürth (DE); DROSTE, Eva, 91054 Erlangen (DE)
(74) Vertreter: FDST Patentanwälte

(57) **Zusammenfassung**

Es wird ein Verfahren zur Fehlererkennung bei einem Hörgerät (2) eines Nutzers angegeben, wobei ein Ist-Bild (IB) von einer Komponente (K) des Hörgeräts (2) bereitgestellt wird, wobei eine Analyseeinheit (20) einen Bildvergleich durchführt, bei welchem das Ist-Bild (IB) mit einem oder mehreren Referenzbildern (RB) verglichen wird, welche jeweils eine Komponente (K) in einem Zustand (Z) zeigen, von welchem vorbekannt ist, ob die Komponente (K) fehlerhaft ist oder fehlerfrei, wobei die Analyseeinheit (20) als einen Zustand (Z) der Komponente (K) des Ist-Bildes (IB) denjenigen Zustand (Z) bestimmt, welcher demjenigen Referenzbild (RB) zugeordnet ist, welches dem Ist-Bild (IB) am Ähnlichsten ist, sodass erkannt wird, ob die Komponente (K) fehlerhaft ist oder fehlerfrei. Weiter wird ein System (28) angegeben, mit einer Analyseeinheit (20), welche ausgebildet ist zur Durchführung des Verfahrens.

## Beschreibung

Die Erfindung betrifft ein Verfahren zur Fehlererkennung bei einem Hörgerät sowie ein System.

Ein Hörgerät dient häufig zur Versorgung eines hörgeschädigten Nutzers. Hierzu weist das Hörgerät ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Signalverarbeitung ist vorzugsweise ein Teil der Steuereinheit. Die Modifikation erfolgt insbesondere anhand eines individuellen Audiogramms des Nutzers, welcher dem Hörgerät zugeordnet ist, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts wieder in Schall umgewandelt wird und an den Nutzer ausgegeben wird.

Ein Hörgerät ist auf vielfältige Weise fehleranfällig. Typischerweise ist ein Hörgerät aus einer Vielzahl an einzelnen Komponenten zusammengesetzt, welche zuweilen auch individuell für den jeweiligen Nutzer des Hörgeräts ausgewählt oder angepasst sind. Problematisch ist es, wenn unwissentlich oder versehentlich eine falsche Komponente ausgewählt wurde, welche für den Nutzer nicht vorgesehen ist. Weiter verschleißen einzelne Komponenten im Verlauf der Nutzung des Hörgeräts, was ebenfalls problematisch ist. Häufig ist der Nutzer ein Laie, welcher den ordnungsgemäßen Zustand der Komponenten des Hörgeräts nicht ohne Weiteres zuverlässig bestimmen kann. Der Nutzer ist unter Umständen nicht in der Lage sein oder ihr Hörgerät ordnungsgemäß zu warten oder instandzuhalten.

In der DE 10 2018 202 429 B3 ist ein Verfahren zur Anpassung von Parametern eines Hörsystems beschrieben. An ein Hörhilfegerät wird ein Bauteil zur akustischen Ankopplung an das Ohr eines Hörgeräteträgers angebracht. Mittels einer Kamera wird ein Bild von dem zur akustischen Ankopplung eingesetzten Bauteil aufgenommen und anhand des aufgenommenen Bildes wird die Produktidentität des Bauteils identifiziert.

In der EP 3 435 689 A1 ist ein Gerät für ein Hörinstrument beschrieben. Eine Identifikationseinheit identifiziert eine Eigenschaft des Hörinstruments und eine Kontrolleinheit kontrolliert einen Einrichtungsprozess für das Hörinstrument basierend auf der Eigenschaft.

Vor diesem Hintergrund ist es eine Aufgabe der Erfindung, ein Verfahren anzugeben, mittels welchem eine Fehlererkennung beim Hörgerät möglichst einfach durchführbar ist. Das Verfahren soll insbesondere alltagstauglich sein und einem Nutzer des Hörgeräts ermöglichen, weitestgehend oder vollständig selbsttätig einen Fehler am Hörgerät zu erkennen.

Die Aufgabe wird erfindungsgemäß gelöst durch ein Verfahren mit den Merkmalen gemäß Anspruch 1 sowie durch ein System mit den Merkmalen gemäß Anspruch 15. Vorteilhafte Ausgestaltungen, Weiterbildungen und Varianten sind Gegenstand der Unteransprüche. Die Ausführungen im Zusammenhang mit dem Verfahren gelten sinngemäß auch für das System und umgekehrt. Sofern nachfolgend Verfahrensschritte des Verfahrens beschrieben werden, ergeben sich vorteilhafte Ausgestaltungen für das System insbesondere dadurch, dass dieses ausgebildet ist, einen oder mehrere dieser Verfahrensschritte auszuführen.

Ein Kerngedanke der Erfindung ist insbesondere eine Fehlererkennung mittels eines Bildvergleichs.

Das Verfahren dient zur Fehlererkennung bei einem Hörgerät. Bei dem Verfahren wird ein Ist-Bild von einer Komponente des Hörgeräts bereitgestellt. Die Komponente wird alternativ auch als Bauteil bezeichnet. Weiter führt bei dem Verfahren eine Analyseeinheit einen Bildvergleich durch, bei welchem das Ist-Bild mit einem oder mehreren Referenzbildern verglichen wird. Die Referenzbilder zeigen jeweils eine Komponente in einem Zustand, von welchem vorbekannt ist, ob die Komponente fehlerhaft ist oder fehlerfrei. Die Komponente eines jeweiligen Referenzbildes ist allgemein eine Komponente eines Hörgeräts, jedoch nicht zwingend eine Komponente speziell des Hörgeräts des Nutzers. Im Rahmen des Verfahrens bestimmt nun die Analyseeinheit als einen Zustand der Komponente des Ist-Bildes denjenigen Zustand, welcher demjenigen Referenzbild zugeordnet ist, welches dem Ist-Bild am Ähnlichsten ist, sodass erkannt wird, ob die Komponente fehlerhaft ist oder fehlerfrei.

Ist eine Komponente fehlerfrei, dann ist deren Zustand fehlerfrei und das Ist-Bild oder das Referenzbild dieser Komponente zeigt diese im fehlerfreien Zustand. Ist dagegen eine Komponente fehlerhaft, dann ist deren Zustand fehlerhaft und das Ist-Bild oder das Referenzbild dieser Komponente zeigt diese im fehlerhaften Zustand. Insbesondere weist eine Komponente im fehlerhaften Zustand einen Fehler auf. Dieser Fehler ist zweckmäßigerweise vorbekannt, an sich ist es aber zunächst grundsätzlich ausreichend, zu erkennen, dass eine Komponenten fehlerhaft ist, ohne den Fehler genauer zu kennen.

Das Hörgerät dient vorzugsweise zur Versorgung eines hörgeschädigten Nutzers. Hierzu weist das Hörgerät ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Modifikation erfolgt insbesondere anhand eines individuellen Audiogramms des Nutzers, welcher dem Hörgerät zugeordnet ist, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts wieder in Schall umgewandelt wird und an den Nutzer ausgegeben wird.

Bei bestimmungsgemäßem Gebrauch wird das Hörgerät vom Nutzer im oder am Ohr getragen. In einer Ausgestaltung ist das Hörgerät ein binaurales Hörgerät, mit zwei Einzelgeräten, welche auf unterschiedlichen Seiten des Kopfes getragen werden. Eine monaurale Ausgestaltung ist aber ebenso möglich. Während des Verfahrens zur Fehlererkennung wird das Hörgerät zweckmäßigerweise nicht vom Nutzer getragen, sondern ist abgelegt. Eine Anwendung des Verfahrens während das Hörgerät vom Nutzer getragen wird ist aber ebenso möglich und auch vorteilhaft.

Der Erfindung liegt insbesondere die Beobachtung zugrunde, dass ein Anpassen eines Hörgeräts an die individuellen Bedürfnisse eines Nutzers bei einem Fachmann erfolgt, z.B. einem Akustiker oder einem sogenannten "hearing care professional", welcher beim Anpassen seine oder ihre Erfahrungen einfließen lässt, um typische Probleme zu umgehen oder zu lösen. Beispielsweise erfolgt bereits die Auswahl eines möglichst optimalen Hörgeräts und dessen Komponenten wie Hörerschlauch, Ohrstück, Gehäuseform, Hörer und dergleichen erfahrungsbasiert. Eine nicht optimale, d.h. fehlerhafte Auswahl würde entsprechend den Nutzen des Hörgeräts für den Nutzer beeinträchtigen. Aber auch im weiteren Verlauf erfolgt eine Fehlererkennung, d.h. eine Identifikation von Fehlern wie z.B. Defekten, Verschmutzungen, Beschädigungen, Verschleiß, inkorrektem Zusammenbau und dergleichen durch einen Fachmann häufig erfahrungsbasiert. Ein Fehler ist allgemein eine fehlerhafte Auswahl einer Komponente, eine fehlerhafte Anbindung einer Komponente an eine andere Komponente oder ein mit der Zeit auftretender Fehler aufgrund falscher Bedienung, Reinigung oder Zusammensetzung. Konkrete Beispiele für Fehler sind eine Verschmutzung mit Cerumen durch mangelhafte Reinigung des Hörgeräts, inkorrekter Zusammenbau nach einer Reinigung des Hörgeräts, falsches Einsetzen einer Batterie in das Hörgerät, Defekt einer Komponente und dergleichen. Wird ein Fehler nicht oder nicht korrekt erkannt, hat dies je nach konkretem Fehler entsprechend negative Folgen für den Nutzer des Hörgeräts.

Dabei sind viele Fehler oftmals auf einfache Weise behebbar und eine Korrektur kann gegebenenfalls mit einer Anleitung auch einfach vom Nutzer selbst ausgeführt werden. Problematisch ist allerdings eine vorangegangene, möglichst zuverlässige und korrekte Erkennung des Fehlers. Dies ist nicht ohne Weiteres vom Nutzer selbst leistbar. Hier setzt die vorliegende Erfindung an und stellt eine Lösung zur Verfügung, mittels welcher der Nutzer bei der Fehlererkennung unterstützt wird. Im Kern wird mittels eines Bildvergleichs eine automatisierte Diagnose einer oder mehrerer Komponenten des Hörgeräts durchgeführt und insofern die Fehlererkennung durch einen Fachmann automatisiert. Dadurch werden aufwändige Untersuchungen durch einen Fachmann vermieden, der Nutzer muss den Fachmann nicht explizit aufsuchen, sondern kann vielmehr vor Ort und selbsttätig Fehler am Hörgerät identifizieren. Das Aufsuchen eines Fachmanns ist somit nicht notwendig und entfällt vorteilhaft. Eine Fehlererkennung ist vom Nutzer allein ohne Fachmann durchführbar. Dadurch ergeben sich insbesondere eine Zeitersparnis und eine höhere Nutzerzufriedenheit. Außerdem ist die hier beschriebene Lösung vorteilhaft, falls eine Anpassung des Hörgeräts nicht von einem Fachmann, sondern von einem diesbezüglich ungelernten Dienstleister vorgenommen wird, welcher dann entsprechend bei der Anpassung unterstützt wird. Auf diese Weise können Unzufriedenheit, Beschwerden und Retouren reduziert werden.

Ein Vorteil der Erfindung ist somit insbesondere, dass der Nutzer zur Erkennung insbesondere von einfachen, geringfügigen und alltäglichen Fehlern am Hörgerät nicht notwendigerweise einen Fachmann zur Fehlererkennung kontaktieren oder aufsuchen muss. Die Fehlererkennung durch den Fachmann wird hier durch ein automatisiertes Verfahren ersetzt, welches insbesondere durch den Nutzer selbst initiierbar ist und vorteilhaft keine Beteiligung eines Fachmanns erfordert. Die Erfahrung des Fachmanns wird hier ersetzt durch einen Bildvergleich einer Komponente mit einer Anzahl von Referenzbildern, in welchen diese Erfahrung sozusagen gespeichert ist. Unter "einer Anzahl von" wird allgemein "ein oder mehrere" verstanden. Vorzugsweise ist eine Vielzahl von Referenzbildern vorhanden. Von einer konkret zu überprüfenden Komponente wird ein Ist-Bild aufgenommen, um dieses dann im Rahmen des hier beschriebenen Verfahrens mit gespeicherten Referenzbildern dieser oder anderer, insbesondere ähnlicher Komponenten zu vergleichen und somit anhand eines ähnlichen und vorbekannten Falls den Zustand der zu überprüfenden Komponente mit hinreichender Wahrscheinlichkeit zu erkennen.

Das Ist-Bild wird vorzugsweise mittels einer Kamera erzeugt, entweder als Teil des Verfahrens oder separat davon. Die Kamera ist geeigneterweise vom Nutzer bedienbar, sodass dieser die Kamera auslösen kann und diese dadurch dann das Ist-Bild erzeugt. Die Kamera ist beispielsweise eine Webcam oder eine Kamera eines Zusatzgeräts. Ein geeignetes Zusatzgerät ist ein Smartphone. Auf dem Ist-Bild ist die Komponente gezeigt, für welche eine Fehlererkennung durchgeführt werden soll. Das Ist-Bild muss nicht zwingend ausschließlich die Komponente zeigen, sondern zeigt in einer ebenfalls geeigneten Ausgestaltung mehrere insbesondere miteinander verbundene Komponenten oder sogar das gesamte Hörgerät. Die Komponente ist beispielsweise ein Gehäuse des Hörgeräts, ein Ohrstück, ein Schallschlauch, ein Verbindungsleitung, ein Hörer oder eine Kombination hiervon. Insbesondere gelten die Ausführungen zu einem Schallschlauch auch für eine Verbindungsleitung und umgekehrt. Grundsätzlich ist ein einzelnes Ist-Bild bereits ausreichend, in einer vorteilhaften Ausgestaltung werden aber mehrere Ist-Bilder aufgenommen, insbesondere als ein Video, sodass die Ist-Bilder die Komponente insbesondere in unterschiedlichen Ansichten zeigen. Hierdurch wird die Fehlererkennung genauer.

Die Referenzbilder sind vorzugsweise in einer Datenbank gespeichert, welche ein Teil der Analyseeinheit ist oder auf welche die Analyseeinheit zugreift, z.B. über WLAN oder das Internet. Ein jeweiliges Referenzbild zeigt eine mögliche Komponente oder Zusammensetzung von mehreren Komponenten eines Hörgeräts. Dabei sind vorzugsweise für jeweils verschiedene Ausgestaltungen für eine jeweilige Komponente auch entsprechende Referenzbilder gespeichert. Die Referenzbilder sind beispielsweise zuvor erzeugte Bilder von realen Komponenten in diversen Zuständen. Zu jedem Referenzbild ist außerdem eine Information gespeichert, welche mit dem Referenzbild verknüpft ist und angibt, ob die auf dem Referenzbild gezeigte Komponente oder Zusammensetzung von Komponenten fehlerfrei ist oder fehlerhaft, und in letzterem Fall zweckmäßigerweise zusätzlich, welcher Fehler konkret vorliegt. Die Datenbank ist demnach eine Datenbank von Referenzzuständen, welche vorbekannt sind und als Basis für die Fehlererkennung im konkreten Fall des Ist-Bildes verwendet werden.

In der Analyseeinheit sind die Verfahrensschritte, welche von der Analyseeinheit durchgeführt werden, insbesondere programmtechnisch oder schaltungstechnisch realisiert oder eine Kombination hiervon. Beispielswiese ist die Analyseeinheit hierfür als ein Mikroprozessor oder als ein ASIC ausgebildet oder als eine Kombination hiervon. Die Analyseeinheit ist allgemein ein Teil eines Computers, beispielsweise eines Smartphones oder allgemein eines Zusatzgeräts, welches mit dem Hörgerät über eine Datenverbindung verbindbar ist. In einer anderen geeigneten Ausgestaltung ist die Analyseeinheit ein Teil des Hörgeräts. In einer anderen geeigneten Variante ist die Analyseeinheit ein Teil eines Ladegeräts für das Hörgerät. Auch das Ladegerät und das Hörgerät stellen in diesem Sinne jeweils einen Computer dar.

Das Ist-Bild wird der Analyseeinheit zugeführt und von dieser im Rahmen des Bildvergleichs hinsichtlich eines möglichen Fehlers ausgewertet. Die Ähnlichkeit wird zweckmäßigerweise anhand an sich bekannter Verfahren zur Bilderkennung ermittelt. Wie der Bildvergleich konkret durchgeführt wird, ist vorliegend nicht wesentlich. Wichtig ist allein, dass anhand eines geeigneten Maßes zur Quantifizierung der Ähnlichkeit des Ist-Bildes mit einem jeweiligen Referenzbild dasjenige Referenzbild gefunden wird, welches dem Ist-Bild am Ähnlichsten ist. Dieses Referenzbild gibt am Wahrscheinlichsten den tatsächlichen Zustand der Komponente auf dem Ist-Bild an, sodass anhand der Information, welche mit dem Referenzbild verknüpft ist, mit entsprechender Wahrscheinlichkeit auf den Zustand der Komponente geschlossen wird, d.h. ob diese fehlerfrei ist oder nicht. Die Referenzbilder stellen demnach eine Sammlung möglicher Zustände dar, aus welchen durch die Analyseeinheit beim Bildvergleich der Wahrscheinlichste ausgewählt wird. Auf diese Weise ist eine einfache und automatisierte Fehlererkennung realisiert, welche keine Aktion eines Fachmanns erfordert und welche vorteilhaft alleinig vom Nutzer initiierbar ist.

Die Referenzbilder müssen nicht zwingend fehlerhafte Zustände zeigen. In einer geeigneten Ausgestaltung ist zumindest eines der Referenzbilder ein Bild der Komponente ohne einen Fehler und somit in einem fehlerfreien Zustand, sodass bei einer Übereinstimmung des Ist-Bildes mit diesem Referenzbild erkannt wird, dass kein Fehler vorliegt, und die Komponente als fehlerfrei identifiziert wird. Auf diese Weise wird positiv festgestellt, dass kein Fehler vorliegt.

Nichtsdestoweniger ist es sinnvoll, alternativ oder zusätzlich solche Referenzbilder zu verwenden, welche einen fehlerhaften Zustand zeigen. In einer geeigneten Ausgestaltung ist zumindest eines der Referenzbilder ein Bild der Komponente mit einem bestimmten Fehler und somit in einem fehlerhaften Zustand, sodass bei einer Übereinstimmung des Ist-Bildes mit diesem Referenzbild erkannt wird, dass ein Fehler vorliegt, und die Komponente als diesen Fehler aufweisend identifiziert wird. Durch den Bildvergleich wird demnach konkret der Fehler bestimmt, welchen die Komponente auf dem Ist-Bild aufweist, sodass dann der Nutzer zielgerichtet den fehlerhaften Zustand korrigieren kann.

Das Verfahren lässt sich auch vorteilhaft dazu verwenden, zu überprüfen, ob eine Komponente aus mehreren möglichen Komponenten korrekt und für den Nutzer passend ausgewählt wurde. Entsprechend ist in einer geeigneten Ausgestaltung eine Soll-Komponente für den Nutzer individuell aus einer Menge unterschiedlicher Komponenten ausgewählt und zumindest eines der Referenzbilder ist ein Bild der Soll-Komponente, sodass von der Analyseeinheit erkannt wird, dass die Komponente fehlerhaft ist, wenn diese nicht der Soll-Komponente entspricht. Beispielsweise ist die Komponente ein Schallschlauch oder ein Ohrstück, welcher bzw. welches abhängig von der Form des Ohrs oder des Gehörgangs des Nutzers ausgewählt wurde aus einer Menge mehrerer und verschiedener Schallschläuche oder Ohrstücke für verschiedene Formen von Ohren oder Gehörgängen. Die Soll-Komponente wird der Analyseeinheit als Vorgabe mitgeteilt oder ist in dieser bereits gespeichert, z.B. im Rahmen einer vorigen Anpassung bei einem Fachmann. Geeignet ist auch eine Ausgestaltung, bei welcher auf dem Bild Ist-Bild die Komponente gemeinsam mit dem Nutzer, speziell dessen Ohr oder Gehörgang, abgebildet ist, z.B. in eingesetztem oder angebrachtem Zustand. Hierbei wird die Soll-Komponente insbesondere im Rahmen einer automatischen Auswahl zweckmäßigerweise anhand des Nutzers im Ist-Bild ausgewählt und der Analyseeinheit als Vorgabe mitgeteilt. Dabei wird beispielsweise aus mehreren Komponenten und deren Referenzbildern die am besten passende ausgewählt und das zugehörige Referenzbild als Vorgabe verwendet. Durch den Bildvergleich wird dann von der Analyseeinheit erkannt, ob die Komponente auf dem Ist-Bild auch tatsächlich der Vorgabe entspricht, z.B. der Vorgabe eines Fachmanns oder einer automatisch anhand des Ist-Bildes ermittelten Vorgabe. Ist dies nicht der Fall, ist die Komponente im individuellen Fall für den Nutzer fehlerhaft.

In einer geeigneten Ausgestaltung ist die Komponente ein Ohrstück zum Einsetzen in einen Gehörgang des Nutzers. Das Ohrstück ist in einer zweckmäßigen Ausgestaltung ein sogenannter Dome, welcher typischerweise aus einem Material besteht, welches derart weich ist, dass es sich beim Einführen in den Gehörgang verformt und an dessen Form anpasst. Das Ohrstück wird insbesondere endseitig auf einen Hörer oder einen Schallschlauch aufgesetzt und an diesem in den Gehörgang eingesetzt. Je nach Art des Hörgeräts und Form des Gehörgangs unterscheiden sich die Ohrstücke mitunter erheblich. Das Ohrstück ist für einen Nutzer oftmals individuell ausgewählt. Auch sind speziell bei einem binauralen Hörgerät zuweilen den beiden zugehörigen Einzelgeräten unterschiedliche Ohrstücke zugeordnet, sodass hier mittels des Verfahrens vorteilhaft erkannt wird, ob an ein jeweiliges Einzelgerät auch das zugeordnete Ohrstück angeschlossen ist. Somit wird eine links-rechts-Vertauschung der Ohrstücke vorteilhaft vermieden.

Ein bevorzugter Anwendungsfall für die vorgenannt Ausgestaltung zur Überprüfung der Auswahl einer Komponente ist, dass einem Nutzer mit dem Hörgerät mehrere verschiedene Ohrstücke bereitgestellt werden, von welchem aber speziell eines verwendet werden soll. Beispielsweise ist die optimale Einstellung der Signalverarbeitung des Hörgeräts abhängig vom Ohrstück. Durch den beschriebenen Bildvergleich stellt die Analyseeinheit dann sicher, dass der Nutzer auch tatsächlich das vorgesehene Ohrstück benutzt. Beispielsweise fordert die Analyseeinheit den Nutzer auf, das Ohrstück mit dem Hörgerät zu verbinden und davor oder danach von diesem Ohrstück ein Ist-Bild zu erzeugen. Durch den Bildvergleich erkennt die Analyseeinheit dann, ob der Nutzer das geforderte Ohrstück fehlerfrei ausgewählt hat oder ob die Auswahl des Nutzers fehlerhaft ist.

In einer geeigneten Ausgestaltung ist die Komponente ein Gehäuse des Hörgeräts und das Gehäuse weist eine Mikrofonöffnung auf, sodass von der Analyseeinheit erkannt wird, ob die Mikrofonöffnung verstopft ist oder nicht. Ein oder mehrere Referenzbilder zeigen also das Gehäuse mit einer freien Mikrofonöffnung oder mit einer verstopften Mikrofonöffnung oder eine Kombination hiervon. Eine Mikrofonöffnung verstopft im Verlauf der Nutzung beispielsweise durch mangelhafte Reinigung des Hörgeräts durch den Nutzer. Bei einer verstopften Mikrofonöffnung, d.h. in verstopftem Zustand, ist das Gehäuse fehlerhaft und der Betrieb des Hörgeräts ist unter Umständen nicht optimal. Umgekehrt ist bei einer freien Mikrofonöffnung, d.h. in nicht verstopftem, freiem Zustand, das Gehäuse zumindest in dieser Hinsicht fehlerfrei.

In einer geeigneten Ausgestaltung ist eine Verschmutzung der Komponente insbesondere mit Cerumen ein Fehler, welcher erkannt wird, indem eines der Referenzbilder ein Bild der Komponente in sauberem oder verschmutztem Zustand ist. In fehlerfreiem Zustand ist die Komponente sauber, in fehlerhaftem Zustand dagegen verschmutzt. Die Referenzbilder sind dann Bilder von Komponenten, welche mit Cerumen verschmutzt sind, oder welche sauber sind, wobei letzteres aufgrund der mitunter stark variierenden Verschmutzung besonders vorteilhaft ist. Die Erkennung einer Verschmutzung ist besonders bei einem Ohrstück vorteilhaft, da dieses typischerweise besonders von einer Verschmutzung speziell mit Cerumen betroffen ist.

Im Zusammenhang mit der Erkennung einer Verschmutzung wie in der zuvor beschriebenen Ausgestaltung ist eine Ausgestaltung vorteilhaft, bei welcher die Analyseeinheit nach einer Reinigung der Komponente durch den Nutzer diesen auffordert, ein Ist-Bild von der Komponente aufzunehmen, sodass dann die Analyseeinheit im Rahmen der Fehlererkennung effektiv die korrekte Reinigung der Komponente durch den Nutzer überprüft.

In einer geeigneten Ausgestaltung ist eine Beschädigung der Komponente ein Fehler, welcher erkannt wird, indem eines der Referenzbilder ein Bild der Komponente in unbeschädigtem oder beschädigtem Zustand ist. Eine Beschädigung tritt beispielsweise im Laufe der Zeit an einem Ohrstück oder einem Schallschlauch auf. Eine beschädigte Komponente muss sofort oder bald ersetzt werden, sodass eine entsprechende Fehlererkennung hier vorteilhaft ist.

In einer geeigneten Ausgestaltung ist eine falsche oder defekte Verbindung, auch als Anbindung bezeichnet, der Komponente mit einer anderen Komponente des Hörgeräts ein Fehler, welcher erkannt wird, indem eines der Referenzbilder ein Bild der beiden Komponenten mit fehlerfreier oder fehlerhafter Verbindung ist. Demnach bestimmt die Analyseeinheit also, ob die Komponente fehlerfrei oder fehlerhaft angebunden ist. Dies ist besonders vorteilhaft für ein Ohrstück oder einen Schallschlauch oder dergleichen. Die Verbindung der Komponente mit einer anderen Komponente wird insbesondere dadurch überprüft, dass auf dem Ist-Bild und entsprechend auf einem oder mehreren Referenzbildern jeweils mehrere Komponenten oder sogar das gesamte Hörgerät gezeigt sind.

Ein Anwendungsfall der vorgenannten Ausgestaltung ist eine Überprüfung, ob eine Batterie für das Hörgerät korrekt in ein Batteriefach des Hörgeräts eingesetzt ist. Die Batterie ist dann eine Komponente des Hörgeräts, deren Anordnung relativ zum Batteriefach ist dann eine Verbindung, welche entsprechend fehlerhaft oder fehlerfrei ist.

Die Fehlererkennung mittels Bildvergleich durch die Analyseeinheit wird vom Nutzer selbst initiiert oder automatisch von Zeit zu Zeit oder zu bestimmten Zeitpunkten oder von einem Fachmann, z.B. im Rahmen einer Fernwartung, oder eine Kombination hiervon. Beispielsweise ist das Verfahren von einer App auf einem Smartphone oder sonstigem Zusatzgerät aus vom Nutzer oder automatisch initiierbar.

In einer geeigneten Ausgestaltung fordert die Analyseeinheit zur wiederkehrenden Fehlererkennung den Nutzer wiederkehrend auf, ein Ist-Bild aufzunehmen und bereitzustellen. Dem liegt die Überlegung zugrunde, dass es vorteilhaft ist, von Zeit zu Zeit den Zustand der Komponente zu überprüfen. Unter "wiederkehrend" wird in einer Ausgestaltung eine mehrfache Durchführung des Verfahrens in festen Zeitabständen oder zu bestimmten Zeitpunkten verstanden, z.B. alle 24 Stunden oder einmalig pro Woche oder beim Einsetzen oder Abnehmen des Hörgeräts oder dergleichen. Dadurch ist eine regelmäßige Überprüfung der Komponente auf mögliche Fehler realisiert.

Vorteilhaft ist auch eine Ausgestaltung, bei welcher das Verfahren im Rahmen eines Trouble-Shootings (d.h. Fehlererkennung und -behebung) durchgeführt wird, welches vom Nutzer angefordert wird, beispielsweise mittels einer App auf einem Smartphone oder sonstigem Zusatzgerät. In einer geeigneten Ausgestaltung wird hierzu das Ist-Bild mit dem einem oder den mehreren Referenzbildern verglichen, nachdem von dem Nutzer mittels eines Fragebogens eine Eingabe entgegengenommen wurde, welche anzeigt, dass ein Problem mit dem Hörgerät vorliegt. Vorzugsweise gibt die Analyseeinheit den Fragebogen an den Nutzer aus, sobald durch eine entsprechende Eingabe oder Anfrage angezeigt hat, dass dieser ein Problem mit dem Hörgerät hat. Der Fragebogen enthält eine oder mehrere Fragen, welche zweckmäßigerweise derart gestaltet sind, dass im Vorfeld der Bilderkennung bestimmt wird, welche Komponente voraussichtlich fehlerhaft ist, sodass dann gezielt von dieser Komponente ein Ist-Bild angefordert wird. Durch eine oder mehrere Fragen wird zudem zweckmäßigerweise auch bereits der Fehler eingegrenzt, sodass lediglich eine Teilmenge der Referenzbilder berücksichtigt wird, welche diesen Fehler betrifft.

Das Verfahren ist besonders zweckmäßig, wenn zusätzlich zur Erkennung des Fehlers auch dessen Korrektur durch den Nutzer ermöglicht wird, also wenn sich an die Fehlererkennung eine Fehlerbehebung anschließt. In einer geeigneten Ausgestaltung wird hierzu, falls erkannt wurde, dass die Komponente fehlerhaft ist, an den Nutzer eine Anleitung zur Korrektur des Zustands der Komponente ausgegeben. Die Anleitung wird entsprechend abhängig von der Komponente und dem Fehler ausgewählt, beispielsweise ist jedem Referenzbild, welches eine Komponente in einem fehlerhaften Zustand zeigt, eine geeignete Anleitung zugeordnet, welche dann an den Nutzer ausgegeben wird, z.B. indem diese auf einem Bildschirm eines Zusatzgeräts angezeigt wird. Die Anleitung umfasst beispielsweise eine Anweisung, die Komponente zu reinigen oder an eine Servicestelle einzusenden, oder eine Anleitung, wie die Komponente zu reinigen oder zu reparieren ist.

In einer besonders bevorzugten Ausgestaltung wird das Ist-Bild mittels einer Kamera erzeugt, welche ein Teil eines Ladegeräts für das Hörgerät ist, und das Ist-Bild wird automatisch erzeugt, wenn das Hörgerät mit dem Ladegerät zum Laden verbunden ist, vorzugsweise wenn das Hörgerät mit dem Ladegerät zum Laden verbunden wird. Das Ladegerät ist vorzugsweise eine Ladeschale. Zweckmäßigerweise ist das Ladegerät derart ausgebildet, dass das Hörgerät beim Laden derart in das Ladegerät eingesetzt ist, dass ein Ohrstück des Hörgeräts von der Kamera aufnehmbar ist. In einer vorteilhaften Ausgestaltung wird dann bei eingesetztem Hörgerät ein Ist-Bild des Ohrstücks erzeugt und dann mit diesem Ist-Bild der Bildvergleich durchgeführt, um zu ermitteln, ob das Ohrstück in fehlerhaftem oder in fehlerfreiem Zustand ist, insbesondere ob das Ohrstück verschmutzt ist oder nicht. Auf diese Weise wird automatisch insbesondere beim Ablegen des Hörgeräts am Ende des Tages automatisch eine Fehlererkennung durchgeführt und bei einem Fehler zweckmäßigerweise ein entsprechender Hinweis an den Nutzer ausgegeben.

Das Verfahren profitiert in besonderem Maße von der Verwendung einer Lernmaschine, durch welche die Erkennung mit der Zeit automatisch verbessert wird. Die Lernmaschine ist entweder ein Teil der Analyseeinheit oder separat hiervon ausgebildet. Die Lernmaschine ist zweckmäßigerweise ein Teil des Systems. Eine Lernmaschine wird vorliegend speziell an zwei Stellen gewinnbringend eingesetzt, welche grundsätzlich unabhängig voneinander sind: In einer geeigneten Ausgestaltung wird zum Vergleichen des Ist-Bildes mit dem einen oder den mehreren Referenzbildern eine Lernmaschine verwendet. Alternativ oder zusätzlich werden in einer geeigneten Ausgestaltung zusätzliche Referenzbilder mittels einer Lernmaschine erzeugt. Bei einer Kombination werden entweder zwei separate Lernmaschinen verwendet oder eine einzelne Lernmaschine für beide Anwendungen zugleich.

Sofern zum Vergleichen des Ist-Bildes mit dem einen oder den mehreren Referenzbildern eine Lernmaschine verwendet wird, ist diese zweckmäßigerweise derart ausgebildet, dass diese bei wiederkehrender Durchführung des Verfahrens selbsttätig geeignete Merkmale in dem Ist-Bild identifiziert, um dieses mit den Referenzbildern zu vergleichen. Die Lernmaschine dient also zur Identifikation von Merkmalen, welche die Komponente im Ist-Bild und in einem Referenzbild charakterisieren. Diese Merkmale sind nicht notwendigerweise vorbekannt, sondern werden von der Lernmaschine in einem Trainingsverfahren insbesondere vorab angelernt. Hierzu wird der Lernmaschine eine Vielzahl an Referenzbildern mit Komponenten in bekanntem Zustand als Trainingsdaten übergeben. Anhand der Trainingsdaten identifiziert die Lernmaschine charakteristische Merkmale für eine jeweilige Komponente in einem jeweiligen Zustand. Diese Merkmale werden dann beim Bildvergleich der Analyseeinheit genutzt, um die Ähnlichkeit des Ist-Bildes mit einem Referenzbild zu bestimmen.

Sofern zusätzliche Referenzbilder mittels einer Lernmaschine erzeugt werden, speichert diese ein Ist-Bild, für dessen Komponente der Zustand bestimmt worden ist, als ein zusätzliches Referenzbild für eine solche Komponente in ebenjenem Zustand. Dadurch wird die Datenbank fortlaufend mit weiteren Referenzbildern erweitert, sodass die Fehlererkennung fortlaufend genauer wird.

Zweckmäßig ist eine Ausgestaltung, bei welcher mehrere Analyseeinheiten gemeinsam auf die Datenbank zugreifen, sodass unterschiedliche Nutzer mit unter Umständen auch unterschiedlichen Hörgeräten eine Fehlererkennung auf Grundlage gemeinsamer Referenzbilder durchführen können. Besonders vorteilhaft ist es, wenn mehrere Analyseeinheiten wie oben beschrieben mittels einer Lernmaschine der Datenbank fortlaufend neue Referenzbilder hinzufügen.

Das erfindungsgemäße System weist eine Analyseeinheit wie vorstehend beschrieben auf, welche ausgebildet ist zur Durchführung eines Verfahrens wie ebenfalls vorstehend beschrieben. Das System ist geeigneterweise ein Zusatzgerät oder ein Hörgerät wie oben beschrieben. Sofern das System ausgebildet, einen oder mehrere Verfahrensschritte auszuführen, ist hierzu insbesondere die Analyseeinheit entsprechend ausgebildet.

Die Aufgabe wird insbesondere auch gelöst durch ein Computerprogrammprodukt, enthaltend ein ausführbares Programm, das bei einer Installation auf einem Computer das Verfahren wie vorstehend beschrieben automatisch ausführt. Die obigen Ausführungen zu dem Verfahren und dem System gelten sinngemäß auch für das Computerprogrammprodukt und umgekehrt. Ein Beispiel für ein Computerprogrammprodukt ist eine App für ein Smartphone oder eine Software für ein Hörgerät oder ein Ladegerät.

Nachfolgend werden Ausführungsbeispiele der Erfindung anhand einer Zeichnung näher erläutert. Darin zeigen jeweils schematisch:
- Fig. 1: ein Hörgerät,
- Fig. 2: ein Verfahren zur Fehlererkennung,
- Fig. 3: ein System,
- Fig. 4: ein anderes System,
- Fig. 5: eine Erkennung einer fehlerhaften Auswahl,
- Fig. 6: eine Erkennung einer Verstopfung,
- Fig. 7: eine Erkennung einer Beschädigung,
- Fig. 8: eine Erkennung einer fehlerhaften Verbindung,
- Fig. 9: das System aus Fig. 4, mit einem Fragebogen,
- Fig. 10: das System aus Fig. 4, mit einer Anleitung.

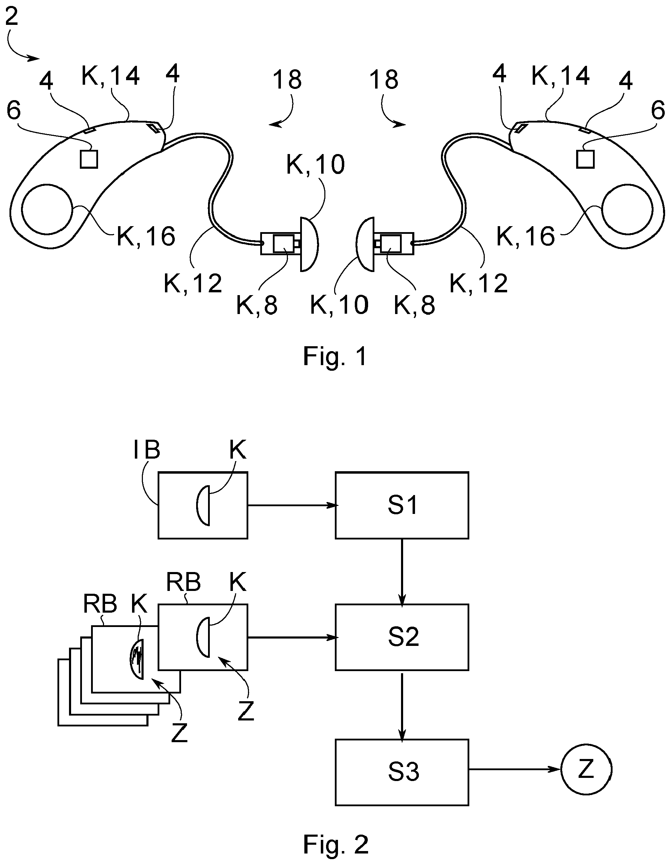

In Fig. 1 ist ein Ausführungsbeispiel für ein Hörgerät 2 gezeigt, welches zur Versorgung eines hörgeschädigten und nicht explizit gezeigten Nutzers dient. Hierzu weist das Hörgerät 2 ein Mikrofon auf, welches hinter einer Mikrofonöffnung 4 angeordnet ist und welches Schall aus der Umgebung aufnimmt und ein elektrisches Eingangssignal erzeugt. Dieses wird zur Modifikation einer Signalverarbeitung 6 des Hörgeräts 2 zugeführt. Die Modifikation erfolgt hier anhand eines individuellen Audiogramms des Nutzers, welcher dem Hörgerät 2 zugeordnet ist, sodass ein individuelles Hördefizit des Nutzers ausgeglichen wird. Die Signalverarbeitung 6 gibt als Ergebnis ein elektrisches Ausgangssignal aus, welches dann über einen Hörer 8 des Hörgeräts 2 wieder in Schall umgewandelt wird und an den Nutzer ausgegeben wird. Bei bestimmungsgemäßem Gebrauch wird das Hörgerät 2 vom Nutzer im oder am Ohr getragen.

Weiter weist das Hörgerät 2 ein Ohrstück 10 auf, welches hier ein sogenannter Dome ist. Der Hörer 8 und das Ohrstück 10 sind über eine Verbindungsleitung 12 mit einem Gehäuse 14 des Hörgeräts verbunden. In einer nicht gezeigten Variante ist der Hörer 8 im Gehäuse 14 untergebracht und das Ohrstück 10 ist mit dem Hörer 8 im Gehäuse 14 über einen Schallschlauch anstelle der Verbindungsleitung 12 verbunden. Die Ausführungen zur Verbindungsleitung 12 gelten analog auch für einen Schallschlauch und umgekehrt. In dem Gehäuse 14 ist außerdem in einem nicht explizit bezeichneten Batteriefach eine Batterie 16 untergebracht.

Das gezeigte Hörgerät 2 ist ein binaurales Hörgerät 2, mit zwei Einzelgeräten 18, welche auf unterschiedlichen Seiten des Kopfes getragen werden. Eine monaurale Ausgestaltung mit nur einem Einzelgerät 18 ist aber ebenso möglich, jedoch nicht explizit gezeigt. Während des Verfahrens zur Fehlererkennung wird das Hörgerät 2 vorliegend nicht vom Nutzer getragen, sondern ist abgelegt. Eine Anwendung des Verfahrens während das Hörgerät 2 vom Nutzer getragen wird ist aber ebenso möglich, jedoch nicht explizit gezeigt.

In Fig. 2 ist ein Verfahren zur Fehlererkennung bei einem Hörgerät 2 gezeigt, z.B. bei einem Hörgerät 2 gemäß Fig. 1 und beispielhaft mit einem Ohrstück 10 als Komponente K. Bei dem Verfahren wird in einem ersten Schritt S1 ein Ist-Bild IB von der Komponente K bereitgestellt. Weiter führt bei dem Verfahren eine Analyseeinheit 20 in einem zweiten Schritt S2 einen Bildvergleich durch, bei welchem das Ist-Bild IB mit einem oder wie hier gezeigt mehreren Referenzbildern RB verglichen wird. Die Referenzbilder RB zeigen jeweils eine Komponente K in einem Zustand Z, von welchem vorbekannt ist, ob die Komponente K fehlerhaft ist oder fehlerfrei. In Fig. 2 sind beispielhaft zwei unterschiedliche Zustände Z gezeigt, einmal ist die Komponente K fehlerfrei, hier sauber, und ein andermal fehlerhaft, hier verschmutzt. Weitere Referenzbilder RB sind in Fig. 2 lediglich angedeutet. Die Komponente K eines jeweiligen Referenzbildes RB ist allgemein eine Komponente K eines Hörgeräts 2, jedoch nicht zwingend eine Komponente K speziell des Hörgeräts 2 des Nutzers. Im Rahmen des Verfahrens bestimmt nun die Analyseeinheit 20 in einem dritten Schritt S3 als einen Zustand Z der Komponente K des Ist-Bildes IB denjenigen Zustand Z, welcher demjenigen Referenzbild RB zugeordnet ist, welches dem Ist-Bild IB am Ähnlichsten ist, sodass erkannt wird, ob die Komponente K fehlerhaft ist oder fehlerfrei. In der in Fig. 2 gezeigten Situation erkennt die Analyseeinheit 20, dass die Komponente K fehlerfrei ist, da die größte Ähnlichkeit mit dem Referenzbild RB besteht, welches eine fehlerfreie Komponente K zeigt.

Eine fehlerhafte Auswahl einer Komponente K oder ein mit der Zeit auftretender Fehler aufgrund falscher Bedienung, Reinigung oder Zusammensetzung würde den Nutzen des Hörgeräts 2 für den Nutzer beeinträchtigen. Das hier vorgestellte Verfahren vermeidet dies durch eine Fehlererkennung mittels eines Bildvergleichs. Viele Fehler sind oftmals auf einfache Weise behebbar und eine Korrektur kann gegebenenfalls mit einer Anleitung A auch einfach vom Nutzer selbst ausgeführt werden. Mittels des hier beschriebenen Verfahrens wird der Nutzer bei der Identifikation einer fehlerhaften Komponente K unterstützt. Im Kern wird mittels des Bildvergleichs eine automatisierte Diagnose einer oder mehrerer Komponenten K des Hörgeräts 2 durchgeführt. Der Nutzer muss nicht explizit einen Fachmann aufsuchen, sondern kann vielmehr vor Ort und selbsttätig Fehler am Hörgerät 2 identifizieren, speziell einfache, geringfügige und alltägliche Fehler. Die hier beschriebene Fehlererkennung ist durch den Nutzer selbst initiierbar und erfordert keine Beteiligung eines Fachmanns.

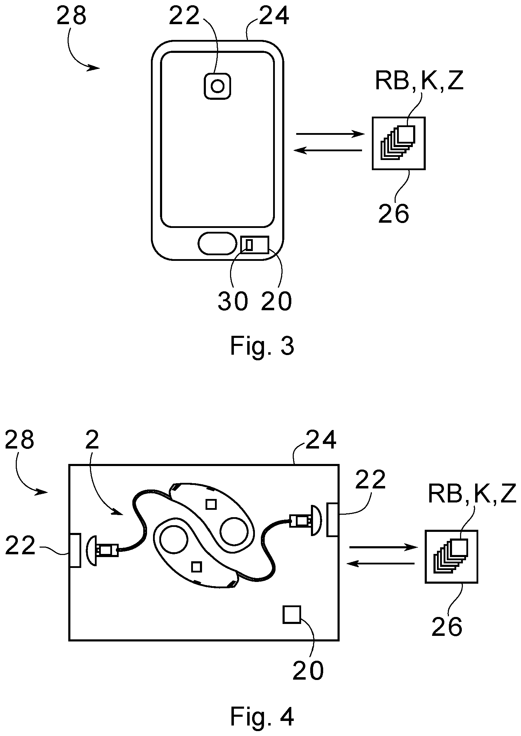

Das Ist-Bild IB wird vorliegend mittels einer Kamera 22 erzeugt, entweder als Teil des Verfahrens oder separat davon und entweder durch den Nutzer oder automatisch. Die Kamera 22 ist beispielsweise eine Webcam oder wie in Fig. 3 gezeigt eine Kamera 22 eines Zusatzgeräts 24, welches in Fig. 3 konkret ein Smartphone ist. In Fig. 3 ist die Kamera 22 gestrichen gezeigt, da sich diese auf einer Rückseite des Zusatzgeräts 24 befindet.

Auf dem Ist-Bild IB ist die Komponente K gezeigt, für welche eine Fehlererkennung durchgeführt werden soll. Das Ist-Bild IB muss nicht zwingend ausschließlich die Komponente K zeigen, sondern zeigt in einer ebenfalls möglichen Ausgestaltung mehrere z.B. miteinander verbundene Komponenten K oder sogar das gesamte Hörgerät 2. Die Komponente K ist beispielsweise wie in Fig. 1 erkennbar ein Gehäuse 14 des Hörgeräts 2, ein Ohrstück 10, ein Schallschlauch, ein Verbindungsleitung 12, ein Hörer 8 oder eine Kombination hiervon. Grundsätzlich ist ein einzelnes Ist-Bild IB bereits ausreichend, in einer nicht explizit gezeigten Ausgestaltung werden aber mehrere Ist-Bilder IB aufgenommen, insbesondere als ein Video, sodass die Ist-Bilder IB die Komponente K beispielsweise in unterschiedlichen Ansichten zeigen.

Die Referenzbilder RB sind vorzugsweise in einer Datenbank 26 gespeichert, welche ein Teil der Analyseeinheit 20 ist oder auf welche die Analyseeinheit 20 wie z.B. in Fig. 3 gezeigt zugreift, z.B. per WLAN oder über das Internet. Ein jeweiliges Referenzbild RB zeigt eine mögliche Komponente K oder Zusammensetzung von mehreren Komponenten K eines Hörgeräts 2. Dabei sind für jeweils verschiedene Ausgestaltungen für eine jeweilige Komponente K auch entsprechende Referenzbilder RB gespeichert. Zu jedem Referenzbild RB ist außerdem eine Information gespeichert, welche mit dem Referenzbild RB verknüpft ist und den Zustand Z der Komponenten K angibt, d.h. ob die auf dem Referenzbild RB gezeigte Komponente K fehlerfrei ist oder fehlerhaft und in einer Weiterbildung zusätzlich, welcher Fehler konkret vorliegt. Die Datenbank 26 ist demnach eine Datenbank 26 von Referenzzuständen, welche vorbekannt sind und als Basis für die Fehlererkennung im konkreten Fall des Ist-Bildes IB verwendet werden.

Die Analyseeinheit 20 ist allgemein ein Teil eines Computers, beispielsweise wie in Fig. 3 gezeigt eines Smartphones oder allgemein eines Zusatzgeräts 24, welches mit dem Hörgerät 2 über eine nicht explizit gezeigte Datenverbindung verbindbar ist, z.B. per Bluetooth. In einer nicht explizit gezeigten Variante ist die Analyseeinheit 20 ein Teil des Hörgeräts 2. In einer anderen Variante, welche in Fig. 4 gezeigt ist, ist die Analyseeinheit ein Teil eines Ladegeräts, welches ein Zusatzgerät 24 ist. In den Fig. 3 und 4 bildet das jeweilige Zusatzgerät 24 mit der Analyseeinheit 20 ein System 28, bei welchem die Analyseeinheit 20 ausgebildet ist zur Durchführung des hier beschriebenen Verfahrens.

Im Ausführungsbeispiel der Fig. 4 wird das Ist-Bild IB mittels einer Kamera 22 erzeugt, welche ein Teil eines Ladegeräts für das Hörgerät 2 ist, und das Ist-Bild IB wird automatisch erzeugt, wenn das Hörgerät 2 mit dem Ladegerät zum Laden verbunden ist, hier speziell wenn das Hörgerät 2 mit dem Ladegerät zum Laden verbunden wird. Das Ladegerät ist allgemein ein Zusatzgerät 24 und in Fig. 4 speziell eine Ladeschale. Das Ladegerät ist derart ausgebildet, dass das Hörgerät 2 beim Laden derart in das Ladegerät eingesetzt ist, dass ein Ohrstück 10 des Hörgeräts 2 von der Kamera 22 aufnehmbar ist. Bei eingesetztem Hörgerät 2 wird dann ein Ist-Bild IB des Ohrstücks 10 erzeugt und mit diesem Ist-Bild IB der Bildvergleich durchgeführt, um zu ermitteln, ob das Ohrstück 10 in fehlerhaftem oder in fehlerfreiem Zustand Z ist.

Das Ist-Bild IB wird der Analyseeinheit 20 zugeführt und von dieser im Rahmen des Bildvergleichs hinsichtlich eines möglichen Fehlers ausgewertet. Die Ähnlichkeit wird hier anhand an sich bekannter Verfahren zur Bilderkennung ermittelt. Anhand eines geeigneten Maßes zur Quantifizierung der Ähnlichkeit des Ist-Bildes IB mit einem jeweiligen Referenzbild RB wird dasjenige Referenzbild RB gefunden, welches dem Ist-Bild IB am Ähnlichsten ist. Dieses Referenzbild RB gibt am Wahrscheinlichsten den tatsächlichen Zustand Z der Komponente K auf dem Ist-Bild IB an, sodass anhand der Information, welche mit dem Referenzbild RB verknüpft ist, d.h. hier dem Zustand Z, mit entsprechender Wahrscheinlichkeit auf den Zustand Z der Komponente K geschlossen wird, d.h. ob diese fehlerfrei ist oder nicht. Die Referenzbilder RB stellen demnach eine Sammlung möglicher Zustände Z dar, aus welchen durch die Analyseeinheit 20 beim Bildvergleich der Wahrscheinlichste ausgewählt wird. Auf diese Weise ist eine automatisierte Fehlererkennung realisiert.

Wie aus dem Beispiel in Fig. 2 bereits deutlich wird, müssen die Referenzbilder RB nicht zwingend fehlerhafte Zustände Z zeigen, sondern in einer möglichen Ausgestaltung ist zumindest eines der Referenzbilder RB ein Bild der Komponente K ohne einen Fehler und somit in einem fehlerfreien Zustand Z, sodass bei einer Übereinstimmung des Ist-Bildes IB mit diesem Referenzbild RB erkannt wird, dass kein Fehler vorliegt, und die Komponente K als fehlerfrei identifiziert wird. Auf diese Weise wird positiv festgestellt, dass kein Fehler vorliegt. Nichtsdestoweniger ist es sinnvoll, alternativ oder zusätzlich solche Referenzbilder RB zu verwenden, welche einen fehlerhaften Zustand Z zeigen, wie ebenfalls aus Fig. 2 erkennbar ist. In einer möglichen Ausgestaltung ist dann zumindest eines der Referenzbilder RB ein Bild der Komponente K mit einem bestimmten Fehler und somit in einem fehlerhaften Zustand Z, sodass bei einer Übereinstimmung des Ist-Bildes IB mit diesem Referenzbild RB erkannt wird, dass ein Fehler vorliegt, und die Komponente K als diesen Fehler aufweisend identifiziert wird.

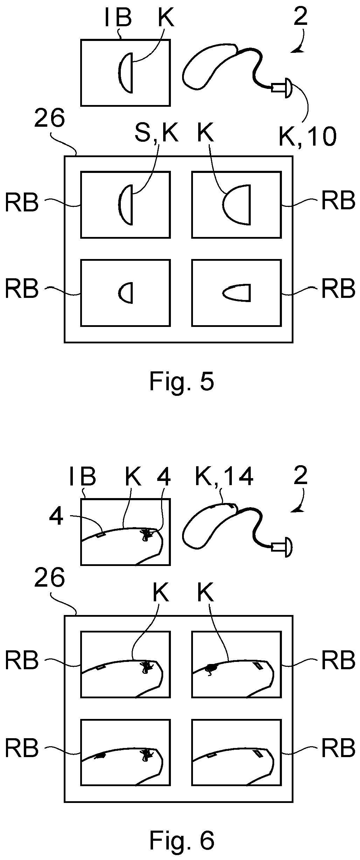

Das Verfahren lässt sich auch dazu verwenden, zu überprüfen, ob eine Komponente K aus mehreren möglichen Komponenten K korrekt und für den Nutzer passend ausgewählt wurde. Dies ist beispielhaft in Fig. 5 gezeigt. Eine Soll-Komponente S für den Nutzer ist individuell aus einer Menge unterschiedlicher Komponenten K ausgewählt und zumindest eines der Referenzbilder RB ist ein Bild der Soll-Komponente S, sodass von der Analyseeinheit 20 erkannt wird, dass die Komponente K fehlerhaft ist, wenn diese nicht der Soll-Komponente S entspricht. Im gezeigten Beispiel ist die Komponente K ein Ohrstück 10, welches abhängig von der Form des Gehörgangs des Nutzers ausgewählt wurde aus einer Menge mehrere und verschiedener Ohrstücke 10 für verschiedene Formen von Gehörgängen. Die Soll-Komponente S wird der Analyseeinheit 20 als Vorgabe mitgeteilt oder ist in dieser bereits gespeichert, z.B. im Rahmen einer vorigen Anpassung bei einem Fachmann. Durch den Bildvergleich wird dann von der Analyseeinheit 20 erkannt, ob die Komponente K auf dem Ist-Bild IB auch tatsächlich der Vorgabe entspricht. Ist dies nicht der Fall, ist die Komponente K im individuellen Fall für den Nutzer fehlerhaft.

Das hier gezeigte Ohrstück 10 ist ein sogenannter Dome, welcher typischerweise aus einem Material besteht, welches derart weich ist, dass es sich beim Einführen in den Gehörgang verformt und an dessen Form anpasst. Das Ohrstück 10 wird hier wie in Fig. 1 erkennbar endseitig auf den Hörer 8 oder alternativ einen Schallschlauch aufgesetzt und an diesem in den Gehörgang eingesetzt. Je nach Art des Hörgeräts 2 und Form des Gehörgangs unterscheiden sich die Ohrstücke 10 wie in Fig. 5 erkennbar mitunter erheblich. Das Ohrstück 10 ist für einen Nutzer oftmals hochgradig individuell ausgewählt.

In Fig. 6 ist ein anderer Fall gezeigt, bei welchem die Komponente K das Gehäuse 14 des Hörgeräts 2 ist und wobei von der Analyseeinheit 20 erkannt wird, ob die Mikrofonöffnung 4 verstopft ist oder nicht. Ein oder mehrere Referenzbilder RB zeigen also das Gehäuse 14 mit einer freien Mikrofonöffnung 4 oder mit einer verstopften Mikrofonöffnung 4 oder eine Kombination hiervon. Bei einer verstopften Mikrofonöffnung 4, d.h. in verstopftem Zustand Z, ist das Gehäuse 14 fehlerhaft und der Betrieb des Hörgeräts 2 ist unter Umständen nicht optimal. Umgekehrt ist bei einer freien Mikrofonöffnung 4, d.h. in nicht verstopftem, freiem Zustand Z, das Gehäuse 14 zumindest in dieser Hinsicht fehlerfrei. Vorliegend ist sogar bestimmbar, welche der mehreren Mikrofonöffnungen 4 verstopft ist.

In einer anderen Ausgestaltung ist alternativ oder zusätzlich eine Verschmutzung der Komponente K insbesondere mit Cerumen ein Fehler, welcher erkannt wird, indem eines der Referenzbilder RB ein Bild der Komponente K in sauberem oder verschmutztem Zustand Z ist. Ein Beispiel hierfür ist bereits in Fig. 2 gezeigt. In fehlerfreiem Zustand Z ist die Komponente K, hier das Ohrstück 10, sauber, wie im Ist-Bild IB und dem rechten Referenzbild RB in Fig. 2 gezeigt, in fehlerhaftem Zustand Z dagegen verschmutzt, wie in Fig. 2 in dem linken Referenzbild RB mit explizit gezeigtem Ohrstück 10 erkennbar. Die Referenzbilder RB sind dann allgemein Bilder von Komponenten K, welche mit Cerumen verschmutzt sind, oder welche sauber sind. In einer nicht explizit gezeigten Weiterbildung dieser Ausgestaltung fordert die Analyseeinheit 20 nach einer Reinigung der Komponente K durch den Nutzer diesen auf, ein Ist-Bild IB von der Komponente K aufzunehmen, sodass dann die Analyseeinheit 20 im Rahmen der Fehlererkennung effektiv die korrekte Reinigung der Komponente K durch den Nutzer überprüft.

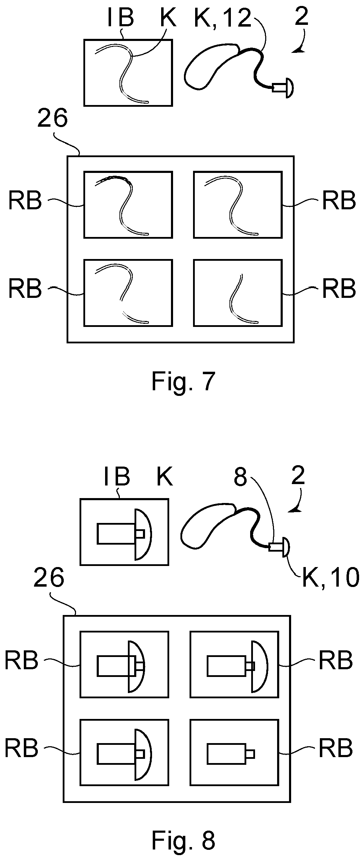

In einer anderen Ausgestaltung ist eine Beschädigung der Komponente K ein Fehler, welcher erkannt wird, indem eines der Referenzbilder RB ein Bild der Komponente K in unbeschädigtem oder beschädigtem Zustand Z ist. Eine Beschädigung tritt beispielsweise im Laufe der Zeit an einem Ohrstück 10 oder einem Schallschlauch auf. In Fig. 7 ist beispielhaft gezeigt, wie eine Beschädigung der Verbindungsleitung 12 erkannt wird.

In einer anderen Ausgestaltung ist eine falsche oder defekte Verbindung der Komponente K mit einer anderen Komponente K des Hörgeräts 2 ein Fehler, welcher erkannt wird, indem eines der Referenzbilder R ein Bild der beiden Komponenten K mit fehlerfreier oder fehlerhafter Verbindung ist. Ein Beispiel hierfür ist in Fig. 8 gezeigt, wobei die Verbindung zwischen Ohrstück 10 und Hörer 8 überwacht wird. Demnach bestimmt die Analyseeinheit 2 also, ob die Komponente K fehlerfrei oder fehlerhaft angebunden ist. Dies ist besonders vorteilhaft für ein Ohrstück 10, eine Verbindungsleitung 12, einen Schallschlauch oder dergleichen.

Ein nicht explizit gezeigter, anderer Anwendungsfall der vorgenannten Ausgestaltung ist eine Überprüfung, ob die Batterie 16 für das Hörgerät 2 korrekt in das Batteriefach des Hörgeräts 2 eingesetzt ist. Die Batterie 16 ist dann eine Komponente K des Hörgeräts 2, deren Anordnung relativ zum Batteriefach ist dann eine Verbindung, welche entsprechend fehlerhaft oder fehlerfrei ist.

Die Fehlererkennung mittels Bildvergleich durch die Analyseeinheit 20 wird vom Nutzer selbst initiiert oder automatisch von Zeit zu Zeit oder zu bestimmten Zeitpunkten oder eine Kombination hiervon. Beispielsweise ist das Verfahren von einer App auf dem Smartphone oder sonstigem Zusatzgerät 24 aus vom Nutzer oder automatisch initiierbar. In einer möglichen Ausgestaltung fordert die Analyseeinheit 20 zur wiederkehrenden Fehlererkennung den Nutzer wiederkehrend auf, ein Ist-Bild IB aufzunehmen und bereitzustellen. Dadurch wird von Zeit zu Zeit der Zustand Z der Komponente K überprüft, z.B. alle 24 Stunden oder einmalig pro Woche oder beim Einsetzen oder Abnehmen des Hörgeräts 2 oder dergleichen.

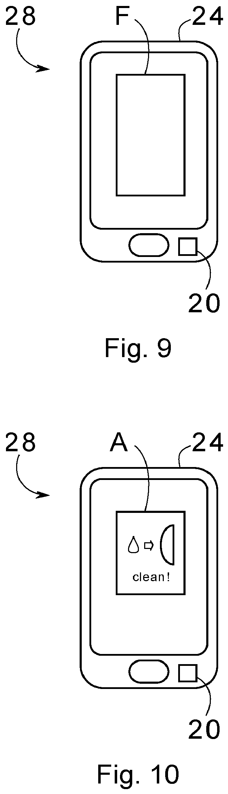

Möglich ist auch eine Ausgestaltung, bei welcher das Verfahren im Rahmen eines Trouble-Shootings durchgeführt wird, welches vom Nutzer angefordert wird, beispielsweise mittels einer App auf dem Smartphone oder sonstigem Zusatzgerät 24. Beispielsweise wird hierzu das Ist-Bild IB mit dem einem oder den mehreren Referenzbildern RB verglichen, nachdem von dem Nutzer mittels eines Fragebogens F eine Eingabe entgegengenommen wurde, welche anzeigt, dass ein Problem mit dem Hörgerät 2 vorliegt. Dies ist beispielhaft in Fig. 9 dargestellt, welche ein Zusatzgerät 24 zeigt, welches ein Smartphone ist, mit einem Bildschirm, auf welchem der Fragebogen F ausgegeben wird. Der Fragebogen F enthält eine oder mehrere Fragen, welche zweckmäßigerweise derart gestaltet sind, dass im Vorfeld der Bilderkennung bestimmt wird, welche Komponente K voraussichtlich fehlerhaft ist, sodass dann gezielt von dieser Komponente K ein Ist-Bild IB angefordert wird.

Vorliegend wird auch, falls erkannt wurde, dass die Komponente K fehlerhaft ist, an den Nutzer eine Anleitung A zur Korrektur des Zustands Z der Komponente K ausgegeben. Die Anleitung A wird entsprechend abhängig von der Komponente K und dem Fehler ausgewählt, beispielsweise ist jedem Referenzbild RB, welches eine Komponente RB in einem fehlerhaften Zustand Z zeigt, eine geeignete Anleitung A zugeordnet, welche dann an den Nutzer ausgegeben wird, z.B. indem diese auf einem Bildschirm eines Zusatzgeräts 24 angezeigt wird. Ein Beispiel ist in Fig. 10 gezeigt, bei welchem basierend auf der Erkennung einer Verschmutzung wie in Fig. 2 die Anleitung A eine Anweisung umfasst, die Komponente K, hier das Ohrstück 10, zu reinigen.

Das Verfahren profitiert in besonderem Maße von der Verwendung einer Lernmaschine 30, durch welche die Erkennung mit der Zeit automatisch verbessert wird. Die Lernmaschine 30 ist entweder ein Teil der Analyseeinheit 20 oder separat hiervon ausgebildet. In Fig. 3 ist beispielhaft eine Lernmaschine 30 als Teil der Analyseeinheit 20 des Systems 28 gezeigt. Eine Lernmaschine 30 wird vorliegend speziell an zwei Stellen gewinnbringend eingesetzt, welche grundsätzlich unabhängig voneinander sind: In einer Ausgestaltung wird zum Vergleichen des Ist-Bildes IB mit dem einen oder den mehreren Referenzbildern RB eine Lernmaschine 30 verwendet, d.h. in Fig. 2 im zweiten Schritt S2. Alternativ oder zusätzlich werden in einer Ausgestaltung zusätzliche Referenzbilder RB mittels einer Lernmaschine 30 erzeugt.

Sofern zum Vergleichen des Ist-Bildes IB mit dem einen oder den mehreren Referenzbildern RB eine Lernmaschine 30 verwendet wird, ist diese beispielsweise derart ausgebildet, dass diese bei wiederkehrender Durchführung des Verfahrens selbsttätig geeignete Merkmale in dem Ist-Bild IB identifiziert, um dieses mit den Referenzbildern RB zu vergleichen. Die Lernmaschine 30 dient also zur Identifikation von Merkmalen, welche die Komponente K im Ist-Bild IB und in einem Referenzbild RB charakterisieren. Diese Merkmale sind nicht notwendigerweise vorbekannt, sondern werden von der Lernmaschine 30 in einem Trainingsverfahren insbesondere vorab angelernt. Hierzu wird der Lernmaschine 30 eine Vielzahl an Referenzbildern RB mit Komponenten K in bekanntem Zustand Z als Trainingsdaten übergeben. Anhand der Trainingsdaten identifiziert die Lernmaschine 30 charakteristische Merkmale für eine jeweilige Komponente K in einem jeweiligen Zustand Z. Diese Merkmale werden dann beim Bildvergleich der Analyseeinheit 20 genutzt, um die Ähnlichkeit des Ist-Bildes IB mit einem Referenzbild RB zu bestimmen.

Sofern zusätzliche Referenzbilder RB mittels einer Lernmaschine 30 erzeugt werden, speichert diese ein Ist-Bild IB, für dessen Komponente K der Zustand Z bestimmt worden ist, als ein zusätzliches Referenzbild RB für eine solche Komponente K in ebenjenem Zustand Z. Dadurch wird die Datenbank 26 fortlaufend mit weiteren Referenzbildern RB erweitert, sodass die Fehlererkennung fortlaufend genauer wird.

### Bezugszeichenliste

- 2: Hörgerät
- 4: Mikrofonöffnung
- 6: Signalverarbeitung
- 8: Hörer
- 10: Ohrstück
- 12: Verbindungsleitung
- 14: Gehäuse
- 16: Batterie
- 18: Einzelgerät
- 20: Analyseeinheit
- 22: Kamera
- 24: Zusatzgerät
- 26: Datenbank
- 28: System
- 30: Lernmaschine

- A: Anleitung
- IB: Ist-Bild
- F: Fragebogen
- K: Komponente
- RB: Referenzbild
- S1: erster Schritt
- S2: zweiter Schritt
- S3: dritter Schritt
- Z: Zustand

## Patentansprüche

1. Verfahren zur Fehlererkennung bei einem Hörgerät (2) eines Nutzers,
- wobei ein Ist-Bild (IB) von einer Komponente (K) des Hörgeräts (2) bereitgestellt wird,
- wobei eine Analyseeinheit (20) einen Bildvergleich durchführt, bei welchem das Ist-Bild (IB) mit einem oder mehreren Referenzbildern (RB) verglichen wird, welche jeweils eine Komponente (K) in einem Zustand (Z) zeigen, von welchem vorbekannt ist, ob die Komponente (K) fehlerhaft ist oder fehlerfrei,
- wobei die Analyseeinheit (20) als einen Zustand (Z) der Komponente (K) des Ist-Bildes (IB) denjenigen Zustand (Z) bestimmt, welcher demjenigen Referenzbild (RB) zugeordnet ist, welches dem Ist-Bild (IB) am Ähnlichsten ist, sodass erkannt wird, ob die Komponente (K) fehlerhaft ist oder fehlerfrei.

2. Verfahren nach Anspruch 1,
wobei zumindest eines der Referenzbilder (RB) ein Bild der Komponente (K) ohne einen Fehler und somit in einem fehlerfreien Zustand (Z) ist, sodass bei einer Übereinstimmung des Ist-Bildes (IB) mit diesem Referenzbild (RB) erkannt wird, dass kein Fehler vorliegt, und die Komponente (K) als fehlerfrei identifiziert wird.

3. Verfahren nach Anspruch 1 oder 2,
wobei zumindest eines der Referenzbilder (RB) ein Bild der Komponente (K) mit einem bestimmten Fehler und somit in einem fehlerhaften Zustand (Z) ist, sodass bei einer Übereinstimmung des Ist-Bildes (IB) mit diesem Referenzbild (RB) erkannt wird, dass ein Fehler vorliegt, und die Komponente (K) als diesen Fehler aufweisend identifiziert wird.

4. Verfahren nach einem der Ansprüche 1 bis 3,
wobei eine Soll-Komponente (S) für den Nutzer individuell aus einer Menge unterschiedlicher Komponenten (K) ausgewählt ist,
wobei zumindest eines der Referenzbilder (RB) ein Bild der Soll-Komponente (S) ist, sodass von der Analyseeinheit (20) erkannt wird, dass die Komponente (K) fehlerhaft ist, wenn diese nicht der Soll-Komponente (S) entspricht.

5. Verfahren nach einem der Ansprüche 1 bis 4,
wobei die Komponente (K) ein Ohrstück (10) zum Einsetzen in einen Gehörgang des Nutzers ist.

6. Verfahren nach einem der Ansprüche 1 bis 5,
wobei die Komponente (K) ein Gehäuse (14) des Hörgeräts (2) ist, wobei das Gehäuse (14) eine Mikrofonöffnung (4) aufweist, sodass von der Analyseeinheit (20) erkannt wird, ob die Mikrofonöffnung (4) verstopft ist oder nicht.

7. Verfahren nach einem der Ansprüche 1 bis 6,
wobei eine Verschmutzung der Komponente (K) insbesondere mit Cerumen ein Fehler ist, welcher erkannt wird, indem eines der Referenzbilder (RB) ein Bild der Komponente (K) in sauberem oder verschmutztem Zustand (Z) ist.

8. Verfahren nach einem der Ansprüche 1 bis 7,
wobei eine Beschädigung der Komponente (K) ein Fehler ist, welcher erkannt wird, indem eines der Referenzbilder (RB) ein Bild der Komponente (K) in unbeschädigtem oder beschädigtem Zustand (Z) ist.

9. Verfahren nach einem der Ansprüche 1 bis 8,
wobei eine falsche oder defekte Verbindung der Komponente (K) mit einer anderen Komponente (K) des Hörgeräts (2) ein Fehler ist, welcher erkannt wird, indem eines der Referenzbilder (RB) ein Bild der beiden Komponenten (K) mit fehlerfreier oder fehlerhafter Verbindung ist.

10. Verfahren nach einem der Ansprüche 1 bis 9,
wobei die Analyseeinheit (20) zur wiederkehrenden Fehlererkennung den Nutzer wiederkehrend auffordert, ein Ist-Bild (IB) aufzunehmen.

11. Verfahren nach einem der Ansprüche 1 bis 10,
wobei das Ist-Bild (IB) mit dem einem oder den mehreren Referenzbildern (RB) verglichen wird, nachdem von dem Nutzer mittels eines Fragebogens (F) eine Eingabe entgegengenommen wurde, welche anzeigt, dass ein Problem mit dem Hörgerät (2) vorliegt.

12. Verfahren nach einem der Ansprüche 1 bis 11,
wobei, falls erkannt wurde, dass die Komponente (K) fehlerhaft ist, an den Nutzer eine Anleitung (A) zur Korrektur des Zustands (Z) der Komponente (K) ausgegeben wird.

13. Verfahren nach einem der Ansprüche 1 bis 12,
wobei das Ist-Bild (IB) mittels einer Kamera (22) erzeugt wird, welche ein Teil eines Ladegeräts (24) für das Hörgerät (2) ist,
wobei das Ist-Bild (IB) automatisch erzeugt wird, wenn das Hörgerät (2) mit dem Ladegerät (24) zum Laden verbunden ist.

14. Verfahren nach einem der Ansprüche 1 bis 13,
wobei zum Vergleichen des Ist-Bildes (IB) mit dem einen oder den mehreren Referenzbildern (RB) eine Lernmaschine (30) verwendet wird und/oder wobei zusätzliche Referenzbilder (RB) mittels einer Lernmaschine (30) erzeugt werden.

15. System (28), mit einer Analyseeinheit (20), welche ausgebildet ist zur Durchführung eines Verfahrens nach einem der Ansprüche 1 bis 14.
